# EUROPÄISCHE PATENTANMELDUNG

(11) **EP 1 847 682 A1**
(43) Veröffentlichungstag der Anmeldung: **24.10.2007**
(21) Anmeldenummer: 06008320.1
(22) Anmeldetag: 21.04.2006
(51) Int. Cl.: F01D 5/14, F02K 3/08

(54) **Verfahren zum Zuführen eines Fluides in den die Turbine durchströmenden Hauptgasstrom und dementsprechende Turbinenschaufel**

(71) Anmelder: SIEMENS AKTIENGESELLSCHAFT, 80333 München (DE)
(72) Erfinder: Beeck, Alexander Ralph, 32828 Orlando, FL (US); Hoffmann, Stefan, Dr., 35119 Rosenthal (DE)

(57) **Zusammenfassung**

Die Erfindung betrifft ein Verfahren zum Zuführen eines ersten Mediums (M1) in ein eine Turbine (8) durchströmendes Gas (11) und eine Turbinenschaufel (20) mit einer Plattform (22), an der ein sich quer dazu erstreckendes, von einem Gas (11) umströmbares Schaufelblatt (24) angeordnet ist und in der mindestens eine Öffnung zum Untermischen eines ersten Mediums (M1) in das Gas (11) vorgesehen ist.

Um ein Verfahren zum Zuführen eines Mediums in ein eine Turbine durchströmendes Gas bereitzustellen, bei dem die Bestandteile des Mediums besonders effizient vermischt werden, schlägt die Erfindung vor, das erste Medium (M1) an einer der Stellen dem Gas (11) zugeführt wird, an der ein Wirbel (33, 34) auftritt und/oder an der der Wirbel (33, 34) entlang strömt.

## Beschreibung

Die Erfindung betrifft ein Verfahren zum Zuführen eines Mediums in ein eine Turbine durchströmendes Gas und eine Turbinenschaufel mit einer Plattform, an der ein sich quer dazu erstreckendes, von einem Gas umströmbares Schaufelblatt angeordnet ist und in der mindestens eine Öffnung zum Untermischen eines Mediums in das Gas vorgesehen ist.

Ein derartiges Verfahren und eine zur Durchführung des Verfahrens geeignete Turbinenschaufel ist beispielsweise aus der WO 2005/3517 A1 bekannt. Die das Schaufelblatt bildenden Schaufelwände umgeben einen zur Führung von Kühlluft vorgesehenen Hohlraum. Außerdem sind in der Schaufelwand der Turbinenschaufel weitere Kanäle zum Führen eines zweiten Mediums, nämlich Brennstoff, vorgesehen. Durch mehrere, durch die Schaufelwand der Turbinenschaufel verkaufende Durchgangsbohrungen kann das im Inneren der Turbinenschaufel strömende Kühlmittel nach Außen in einen Gasraum austreten. Um ein brennbares Gemisch noch in der Schaufelwand herzustellen, sind in dieser Verbindungskanäle vorgesehen, welche die brennstoffführenden Kanäle mit den Durchgangsbohrungen verbinden. Somit kann sich Brennstoff mit Kühlluft noch innerhalb der Durchgangsbohrungen vermischen und als brennbares Gemisch in das die Turbinenschaufel umströmende heiße Gas eingeblasen werden. Mit einer solchen Turbinenschaufel kann sowohl das die Turbine durchströmende Gas als auch die aus der Turbinenschaufel ausströmende Kühlluft durch das Verbrennen des Gemischs nachgeheizt werden, was im Allgemeinen zur Leistungsgradsteigerung der Gasturbine, zur Reduzierung der Schadstoffemissionen und zur Verbesserung des Wirkungsgrades der Gasturbine durchgeführt wird und als eine Form der Carnotisierung bekannt ist.

Außerdem ist aus der WO 99/46540 A1 eine Brennkammer mit einer Vielzahl von porösen Hitzeschildelementen bekannt, durch die ein brennbares Gemisch nachträglich, d.h. außerhalb von Brennern der Gasturbine, in den Verbrennungsraum einer Gasturbine eingebracht werden kann.

Es kann beim bekannten Stand der Technik auftreten, dass in der zum Nachheizen des Gases konstruierten Turbinenschaufel das brennbare Gemisch durch Flammenrückschlag oder Selbstentzündung innerhalb der dafür nicht vorgesehenen Durchgangsbohrungen oder Verbindungskanäle unter Beschädigung des den Hohlraum umgebenden Materials verbrennt. Dies reduziert die Lebensdauer der Turbinenschaufel und kann in schwerwiegenden Fällen zu enormen Schäden an und in einer damit ausgestatteten Turbine führen.

Außerdem kann das Nachheizen des Gases in der Turbine durch an dieser Stelle nachträglich, d.h. außerhalb des Brenners der Gasturbine, eingebrachten Brennstoff zu ungewollt hohen Emissionen führen. Die hohen Emissionen entstehen aufgrund einer unzureichenden Vermischung von Brennstoff und Luft, da diese lediglich einer Vermischungskammer zugeführt werden. Andere Maßnahmen, die eine weitere Durchmischung fördern, sind nicht vorgesehen. Außerdem kann die Verbrennung ggf. auch nur teilweise ablaufen, so dass Brennstoff unverbrannt und ungenutzt aus der Turbine abströmt.

Die Aufgabe der Erfindung ist daher, ein Verfahren zum Zuführen eines Mediums in ein eine Turbine durchströmendes Gas bereitzustellen, bei dem die Bestandteile des Mediums besonders effizient vermischt werden. Weitere Aufgabe der Erfindung ist die Bereitstellung einer gattungsgemäßen Turbinenschaufel, mit der ein aus ihr ausströmbares Medium mit dem die Turbinenschaufel umströmenden Medium besonders effizient vermischt werden kann.

Zur Lösung der auf das Verfahren gerichteten Aufgabe wird nach der Erfindung vorgeschlagen, dass das Medium an einer derjenigen Stellen dem Gas zugeführt wird, an denen ein Wirbel einer Strömung auftritt und/oder an denen der Wirbel entlang strömt. Die Lösung der auf die Turbinenschaufel gerichteten Aufgabe sieht vor, dass die gattungsgemäße Turbinenschaufel die Öffnung an einer Stelle in der Oberfläche des Schaufelblatts oder in der Oberfläche der Plattform aufweist, an der ein Strömungsmedium wirbelartig entlang strömt.

Die Erfindung geht von der Erkenntnis aus, dass die in der Strömung natürlicherweise auftretenden Wirbelsysteme genutzt werden können, um das Medium der Strömung unterzumischen, da eine bestmögliche Vermischung gewünscht ist. Die verbesserte Vermischung wird also ohne wesentliche konstruktive Änderung des Gasraumes oder der Turbinenschaufel erreicht. Dadurch kann die ohnehin in den Wirbelsystemen der Strömung vorhandene Wirbelenergie für die Vermischung der Medien effizient genutzt werden. Das den Gasraum durchströmende Gas kann die verwirbelte Strömung aufweisen, in dem sich aufgrund der Geometrie des Gasraumes die Wirbel ausbilden. Auch kann auf ggf. notwendige Strömungseinbauten verzichtet werden und die aerodynamische Fähigkeit des Bauteils erhalten bleiben. Unter Wirbel sind Kreisströmungen eines Fluids zu verstehen, bei denen sich die betreffenden Fluidpartikel auf konzentrischen Kreisbahnen bewegen. Dabei können die Wirbel beispielsweise als Kärmänsche-Wirbelstraßen, als Eckenwirbel, Kanalwirbel oder als Hufweisenwirbel ausgebildet sein. Die Wirbel unterscheiden sich wesentlich von der Turbulenz, die eine räumlich und zeitlich ungeordnete, d.h. chaotische Strömung eines Gases oder einer Flüssigkeit ist. Turbulente Strömungen enthalten im Gegensatz zu laminaren Strömungen derartig zahlreiche Verwirbelungen mit einem breiten Spektrum von Längen- und Zeitskalen, dass diese aufgrund der dadurch vorhandenen Zufälligkeit des Strömungszustandes und der Geschwindigkeiten nicht vorhersagbar sind.

Insbesondere, wenn das Medium als Brennstoffgemisch oder Brennstoff zum Nachheizen dem die Turbine durchströmenden Gas untergemischt werden soll, was als "in-situ blade reheat" bekannt ist, erweist es sich als besonders vorteilhaft, wenn dieses Medium in einen Hufeisenwirbel oder Kärmän-Wirbel eingeblasen wird. In diesem Fall führt die besonders effiziente Durchmischung zu besonders kurzen Ausbrandzeiten, wodurch eine emissionsarme Verbrennung des Brennstoffs oder Brennstoffgemisches durch Selbstzündung im Gas erreicht wird. Folglich erlaubt die vorgeschlagene Lösung die schnelle Mischung von Brennstoff oder anderen Fluiden mit dem Gas der Turbine, ohne die Gefahr von Rückzündungen oder Selbstzündungen eines eventuell reaktionsfähigen Gemisches, da die Wirbel rückströmungsfrei sind. Es kann durch die Ausnutzung von ohnehin im Strömungsfeld des Gases vorhandenen Wirbelsystemen der konstruktive Aufwand und die aerodynamischen Verluste im Arbeitsmedium minimiert werden.

Durch die Vermischung innerhalb einer kurzen Reaktionsstrecke und Reaktionszeit wird außerdem erreicht, dass das Gemisch rechtzeitig, d. h. noch vor dem Verlassen des ringkanalförmigen Gasraumes verbrennt, da die durch die Nachheizung stattfindende Energieerhöhung des Gases nur dann zur Leistungssteigerung und Wirkungsgradsteigerung der Turbine beträgt, wenn das nachgeheizte Gas noch an den Laufschaufeln der Turbine zur Umsetzung der Strömungsenergie in mechanische Energie vorbeiströmt.

Da das den Gasraum durchströmende Arbeitsmedium bzw. Gas aufgrund seiner vergleichsweise hohen Strömungsgeschwindigkeit nur eine geringe Verweilzeit in der Turbine aufweist, sind besonders kurze Ausbrandzeiten und -längen von übergeordneter Bedeutung. Somit ermöglicht die mit der Erfindung erzielte schnelle Ausbrandzeit vergleichsweise kurze Turbinenbaulängen, d.h. bei Axialturbinen kann die axiale Baulänge verkürzt werden oder muss für den Einsatz des Verfahrens nicht verlängert werden. Dies spart Material- und Herstellungskosten.

Ferner werden durch die Durchführung des erfindungsgemäßen "in-situ blade reheat"-Verfahrens die bereits bei der Entstehung des heißen Gases in der Brennkammer mit entstandenen Emissionen zur weiteren Reduzierung der Emissionsbelastung des Gases teilweise von den in der Turbine entstehenden Flammen mit verbrannt.

In einer vorteilhaften Ausgestaltung des Verfahrens wird das erste Medium in eine aus einer Filmkühlöffnung austretende Kühlströmung eingeblasen. Die verwirbelte Strömung kann somit auch eine Kühlluftströmung umfassen, die als Nierenwirbel aus der Filmkühlöffnung ausströmt. Üblicherweise sind Filmkühlöffnungen als so genannte "fan-shaped holes" ausgeführt, die nicht eine kreisrunde oder, aufgrund ihrer Neigung zur Oberfläche, ovale Öffnung, sondern aufgrund einer Nachbearbeitung einen divergierenden Diffusorbereich aufweisen, so dass das aus der Diffusoröffnung strömende Kühlmittel einen rückstromfreien Nierenwirbel erzeugt. Dieser Nierenwirbel kann zur Vermischung eines Brennstoffs mit der Kühlströmung, welche vorzugsweise Kühlluft ist, genutzt werden. Durch das Einblasen in den Nierenwirbel erfolgt eine besonders homogene Vermischung des Mediums mit der Kühlluftströmung, wodurch im Falle des Nachheizens der Kühlluft bzw. des Gases eine besonders emissionsarme Verbrennung des dabei entstandenen Gemisches zur Leistungssteigerung in einer Turbine sowie deren Wirkungsgradsteigerung erreicht wird.

In einer weiter verbesserten Ausgestaltung der Erfindung wird ein Hufeisenwirbel des Gases von einem Schaufelblatt der Turbine oder von einem Verwirbelungselement verursacht. Durch das Auftreffen des Gases an der Schaufelvorderkante im Bereich der Plattform entstehen in diesem Bereich Hufeisenwirbel, die sich entlang des Schaufelblattes ausbreiten. In diese Wirbel kann zur besonders effizienten Untermischung das Medium eingeblasen werden.

Vorzugsweise ist die Öffnung, aus der das erste Medium in den Gasraum eingeblasen wird, in einem zwischen der Plattform und dem Schaufelblatt angeordneten Übergangsbereich vorgesehen, da das Auftreffen der Gasströmung besonders in diesem Bereich entstehende Hufeisenwirbel im Gas verursacht.

Alternativ oder zusätzlich dazu kann vorgesehen sein, dass die Öffnung in der Plattform, stromab einer Hinterkante des Schaufelblatts oder seitlich von dem Schaufelblatt angeordnet ist. Auch ist es möglich, die Öffnung in der Plattform vor einer Vorderkante des Schaufelblattes anzuordnen, in Bezug auf die Strömungsrichtung des Gases.

Gegebenenfalls kann es erforderlich sein, zur Erzeugung von Wirbeln an der Plattform und/oder an dem Schaufelblatt Mittel vorzusehen, aus denen das erste den Wirbeln zuführbare Medium ausströmbar ist. Es ist somit sogar denkbar, dass nicht nur in der Turbine aufgrund deren konstruktiven Ausgestaltung vorhandene Wirbelsysteme zur Eindüsung des ersten Mediums genutzt werden, sondern auch explizit Mittel in den Gasraum hineinragen, an denen rückstromfreie Wirbel entstehen, so dass in diesen besonders effizient das aus den Mitteln ausströmende erste Medium untergemischt werden kann. Beispielsweise können diese Mittel einige zylinderartige Vorsprünge oder Rippen sein, die an der Plattform oder dem Schaufelblatt angeordnet sind und aus denen das erste Medium ausströmbar ist.

Eine mit einer solchen Turbinenschaufel ausgestatteten Gasturbine oder eine Gasturbine, in der das erfindungsgemäße Verfahren abläuft, ist in besonderem Maße geeignet, das in ihr strömende Arbeitsmedium bzw. Gas durch Zuführen von Medien oder Additive zu manipulieren. Beispielsweise kann der Energiegehalt des Gases durch "in-situ blade reheat" erhöht oder die Emissionsbelastung des Arbeitsmediums durch die Zugabe von Additiven gesenkt werden.

Weitere Vorteile und Merkmale sind der folgenden Beschreibung von Ausführungsbeispielen zu entnehmen. Im Wesentlichen gleich bleibende Elemente sind mit den gleichen Bezugszeichen bezeichnet. Ferner wird bezüglich gleicher Merkmale und Funktionen auf die Beschreibung zum Ausführungsbeispiel verwiesen.

Es zeigen:
- FIG 1: eine Gasturbine in einer teilgeschnittenen Ansicht,
- FIG 2: die perspektivische Darstellung der Turbinenschaufel mit in der Plattform vorgesehenen Öffnungen,
- FIG 3: den Querschnitt der in FIG 5 gezeigten Turbinenschaufel,
- FIG 4: eine erfindungsgemäße Turbinenschaufel mit am Schaufelblatt und an der Plattform vorgesehenen Verwirbelungselementen,
- FIG 5 + 6: zylinderförmige Pins zur Erzeugung von Hufeisenwirbeln,
- FIG 7: eine geschnittene teilperspektivische Darstellung des Schaufelblatts der Turbinenschaufel und
- FIG 8: den aus einer Filmkühlöffnung austretenden Nierenwirbel.

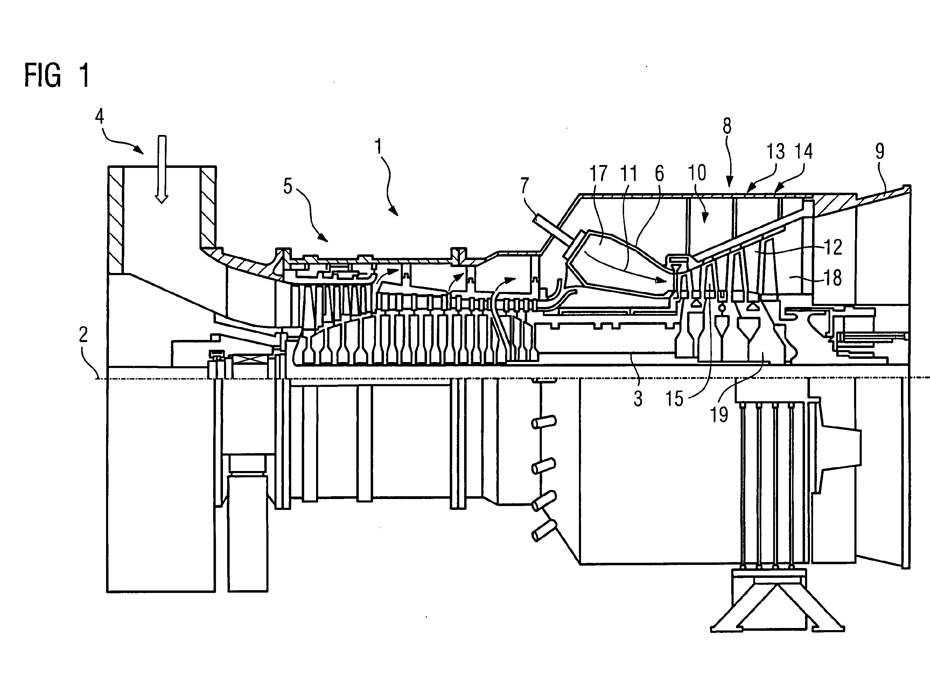

FIG 1 zeigt eine Gasturbine 1 in einem Längsteilschnitt. Sie weist im Inneren einen um eine Rotationsachse 2 drehgelagerten Rotor 3 auf, der auch als Turbinenläufer bezeichnet wird. Entlang des Rotors 3 folgen aufeinander ein Ansauggehäuse 4, ein Verdichter 5, eine torusartige Ringbrennkammer 6 mit mehreren rotationssymmetrisch zueinander angeordneten Brennern 7, eine Turbineneinheit 8 und ein Abgasgehäuse 9. Die Ringbrennkammer 6 bildet einen Verbrennungsraum 17, der mit einem ringkanalförmigen Gasraum 18 kommuniziert. Dort bilden vier hintereinander geschaltete Turbinenstufen 10 die Turbineneinheit 8. Jede Turbinenstufe 10 ist aus zwei Schaufelringen gebildet. In Strömungsrichtung eines in der Ringbrennkammer 6 erzeugten heißen Gases 11 gesehen, folgt im Gasraum 18 jeweils einer Leitschaufelreihe 13 eine aus Laufschaufeln 15 gebildete Reihe 14. Die Leitschaufeln 12 sind am Stator befestigt, wohingegen die Laufschaufeln 15 einer Reihe 14 jeweils mittels einer Turbinenscheibe am Rotor 3 angebracht sind. An dem Rotor 3 ist ein Generator oder eine Arbeitsmaschine (nicht dargestellt) angekoppelt.

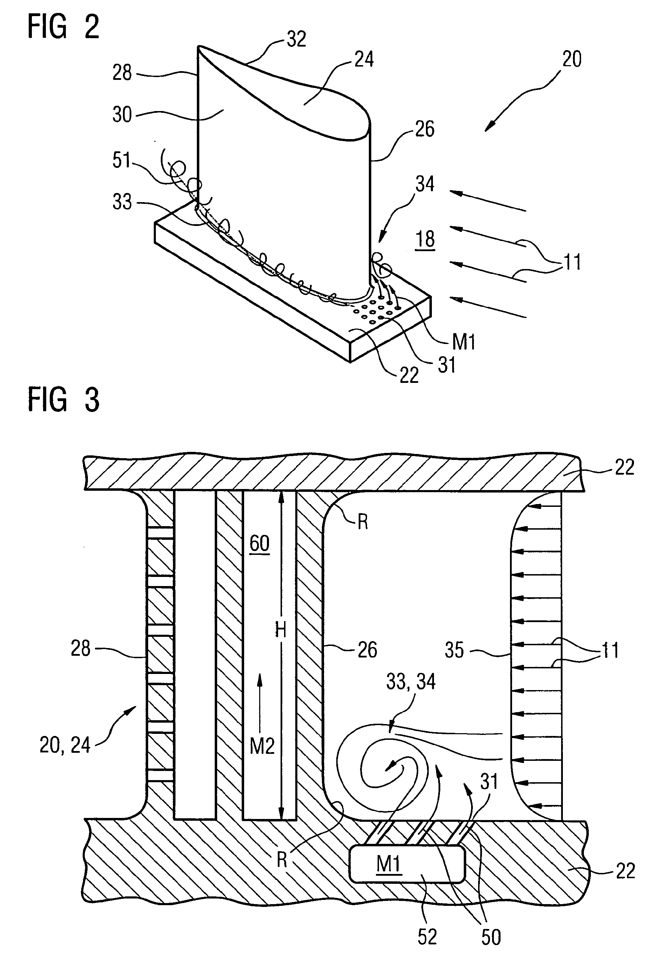

Eine erfindungsgemäße Turbinenschaufel 20 mit einem tragflügelförmig profilierten Schaufelblatt 24, an welchem eine sich quer dazu erstreckende Plattform 22 vorgesehen ist, zeigt FIG 2. Die in der Regel gegossene Turbinenschaufel 20 kann sowohl als Leitschaufel 12 oder als Laufschaufel 15 ausgebildet sein, wobei die Plattform 22 den in der Turbineneinheit 8 angeordnete Gasraum 18 radial außen und/oder radial innen teilweise begrenzt. Das Schaufelblatt 24 erstreckt sich von einer Vorderkante 26 zu einer Hinterkante 28, wobei eine saugseitige Seitenwand 30 und eine druckseitige Seitenwand 32 das Schaufelblatt 24 bildet. Die Turbinenschaufel 20 ist zum Führen eines ersten Mediums teilweise hohl ausgebildet und in nachfolgend beschriebener Art und Weise geeignet, ein durch die Hohlräume strömendes erstes Medium M1 dem das Schaufelblatt 24 umströmende Gas 11 zuzuführen.

In der vom heißen Gas 11 angeströmten Turbinenschaufel 20 sind in der dem Gas 11 ausgesetzten Oberfläche der Plattform 22 stromauf der Vorderkante 26 Öffnungen 31 vorgesehen, durch die das erste Medium M1, vorzugsweise Brennstoff, ausgeblasen werden kann. Das entlang des Gasraumes 18 strömende Heißgas 11 wird von jedem der darin angeordneten Schaufelblätter 24 in zwei Teilströme aufgeteilt, die beidseitig jedes Schaufelblattes 24 entlang strömen. Aufgrund der radial äußeren Begrenzung des Gasraumes 18 als auch aufgrund der radial inneren Begrenzung des Gasraumes 18 durch die Plattformen 22 der Turbinenschaufel 20 entstehen plattformseitig an den Vorderkanten 26 der Schaufelblätter 24 so genannte Sekundärströmungen, die als Teil des Heißgases 11 beispielsweise als Hufeisenwirbel 33, 34 jeweils entlang der Seitenwände 30, 32 des Schaufelblattes 24 in konzentrischen Kreisbahnen strömen. Die Wirbel 33, 34 sind als Kreis- oder Spiralströmungen ausgebildet, bei denen sich alle Fluidpartikel auf konzentrischen Kreisbahnen bewegen. Alle aufeinander folgenden Mittelpunkte der sich fortbewegenden Kreis- bzw. Spiralbahnen beschreiben dabei eine Wirbelachse, welche mit 51 bezeichnet ist.

FIG 3 zeigt teilweise die in FIG 2 gezeigte Turbinenschaufel 20 im Längsschnitt. Die Vorderkante 26 des Schaufelblattes 24 geht über einen Radius R in die Plattform 22 über, in der mehrere zueinander parallel verlaufende, schräg zur Oberfläche der Plattform 22 angeordnete Bohrungen 50 vorgesehen sind, die in einem im Inneren der Plattform 22 liegenden Versorgungskanal 52 münden. Dem Versorgungskanal 52 ist das erste Medium M1 von außerhalb der Turbinenschaufel 20 zuführbar. Gleichfalls ist in FIG 3 das auf die Vorderkante 26 der Turbinenschaufel 20 zuströmende Gas 11 sowie dessen Geschwindigkeitsprofil 35 entlang der Radialrichtung des Gasraumes 18 gezeigt. Entlang des Radius des ringkanalförmigen Gasraumes 18 betrachtet strömt das an der inneren Plattform 22 vorbeiströmende Gas 11 aufgrund der Reibung mit der Oberfläche der Plattform 22 mit vergleichsweise geringer Geschwindigkeit (kürzere Pfeillängen). Mit größer werdendem Abstand zur Plattformoberfläche, d. h. in der in FIG 3 dargestellten Orientierung nach oben, wird die lokale Strömungsgeschwindigkeit innerhalb einer kurzen Strecke größer (längere Pfeillängen), bis sie einen Maximalwert erreicht hat. Für einen größeren radialen Abschnitt bleibt die Strömungsgeschwindigkeit konstant auf dem Maximalwert, bis sie im Bereich der äußeren Plattform 22 der Turbinenschaufel 20 in gleicher Art und Weise wie an der inneren Plattform 22 abnimmt. Aufgrund des an den äußeren und inneren Bereichen verlangsamten Geschwindigkeitsprofils des Gases 11 und aufgrund der Verblockung des Gasraums 18 durch die Schaufelblätter 24 der im ringkanalförmigen Gasraum 18 angeordneten Turbinenschaufeln 20 werden beim Auftreffen des Gases 11 an den Vorderkanten 26 im Bereich der Plattformen 22 die rückströmfreien Wirbel 33, 34 erzeugt, deren Wirbelenergie zum Vermischen des aus dem Bohrungen 50 ausströmenden ersten Mediums M1 mit dem Gas 11 genutzt wird. Das aus den Bohrungen 50 austretende erste Medium M1 wird dabei nahezu senkrecht zur Wirbelachse 51 in den Wirbel eingeblasen. Nach der Entstehung der Wirbel 33, 34 strömt dieser Teil des Gases 11 entlang des Schaufelblattes, bis nach einer bestimmten Wirbellänge dieser in sich zusammen bricht. Dieser Vorgang kann zur Stabilisierung der zur Verbrennung des Gemischs existierenden Flamme genutzt werden.

Besonders vorteilhaft ist bei dieser Ausgestaltung, dass die Ausdüsung des durch die Bohrungen 50 strömenden Brennstoffs von den Wirbeln 33, 34 unterstütz abläuft, da an der Plattformoberfläche aufgrund der Wirbel 33, 34 lokal ein Unterdruck entsteht, der den Brennstoff aus den Bohrungen 50 heraussaugt. Ein Flammenrückschlag wird so sicher vermieden.

Dementsprechend wird das erste Medium M1 an denjenigen Stellen der Turbinenschaufel 20 dem Gas 11 zugeführt, an der der Wirbel 33, 34 erzeugt wird. Dies Verfahren kann insbesondere zum Nachheizen des die Turbine 8 durchströmenden Gases 11 genutzt werden, bei dem als erstes Medium M1 ein Brennstoff oder ein Brennstoffgemisch dem Gas 11 bestmöglich untergemischt wird.

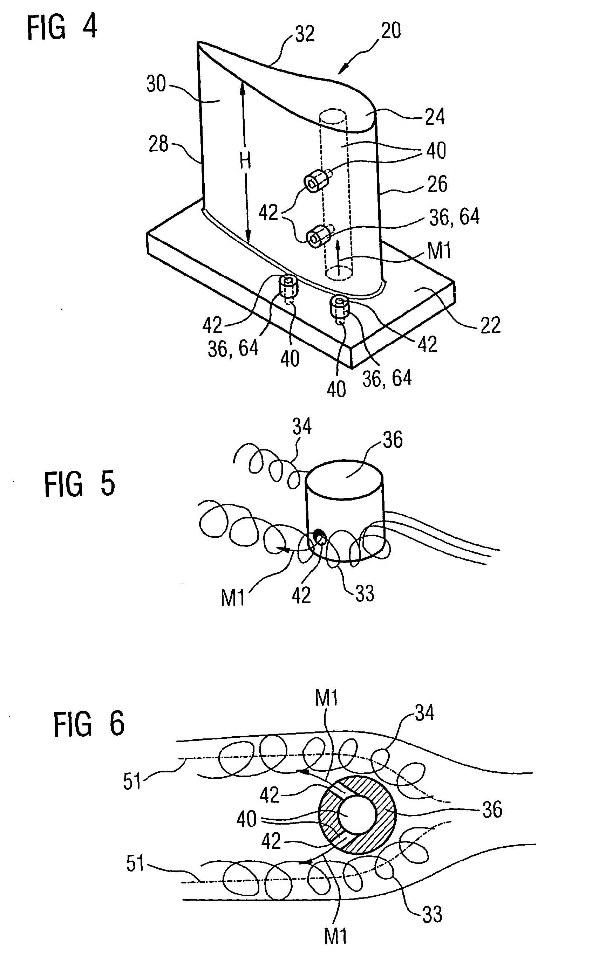

Bei der vorliegenden Erfindung kommt es insbesondere darauf an, dass im Inneren der Turbinenschaufel 20 geführte Medium dem Gas 11 in besonders effizienter Weise unterzumischen. In einer vorteilhaften Weiterbildung der Erfindung sind in FIG 4 exemplarisch und in unverhältnismäßig großer Art und Weise dargestellte Verwirbelungselemente 64 sowohl an der saugseitigen Schaufelwand 30 als auch an der dem Gas 11 ausgesetzten Oberfläche der Plattform 22 in Form von hervorstehenden zylindrischen Pins 36 vorgesehen. Die an der Turbinenschaufel 20 angegossenen Pins 36 sind gemäß FIG 6 ebenso wie die Turbinenschaufel 20 teilweise hohl ausgebildet und weisen im Inneren verlaufende Kanäle 40 auf, durch die das erste Medium M1 strömbar ist, um anschließend durch die Öffnungen 42 in das das Schaufelblatt 24 umströmende Gas 11 mit entsprechendem Druck eingeblasen zu werden. Das erste Medium M1 ist vorzugsweise Brennstoff. Da die Pins 36 versatzartig hervorstehen, wird das an diesen auftreffende Gas 11 jeweils in zwei sich wechselseitig beeinflussende Kärmän-Wirbel 33, 34 aufgeteilt, die sich entlang der Hauptströmungsrichtung des Gases 11 fortsetzen. Das währenddessen aus dem Pin 36 an der Umfangsfläche ausströmende Medium M1 wird an dieser Stelle von den Wirbeln mitgerissen und dabei besonders effizient mit dem Gas 11 vermischt, so dass ein äußerst homogenes Gemisch entsteht, welches zum Nachheizen des Gases 11 sich selbsttätig entzündet. Außerdem wird ein Rückströmen des brennbaren Gemisches in die Turbinenschaufel 20 durch den von den Wirbeln 33, 34 verursachten Abtransport verhindert; das brennbare Gemisch wird von der Öffnung 42 weg bewegt.

Des weiteren ist möglich, dass das Medium M1 senkrecht in das das Schaufelblatt 24 umströmende Gas 11 eingeblasen werden kann, wobei durch die nahezu senkrechte Einblasung des Mediums M1 der gleiche Effekt entsteht. Somit können auch dadurch Hufeisenwirbel im Gas 11 hervorgerufen werden. Dementsprechend ist als Verwirbelungselement auch eine Bohrung denkbar, aus welcher das Medium nahezu senkrecht mit hoher Strömungsgeschwindigkeit in das Gas eingeblasen werden kann. Die Mischungsenergie wird dabei aus dem Gas 11 bezogen.

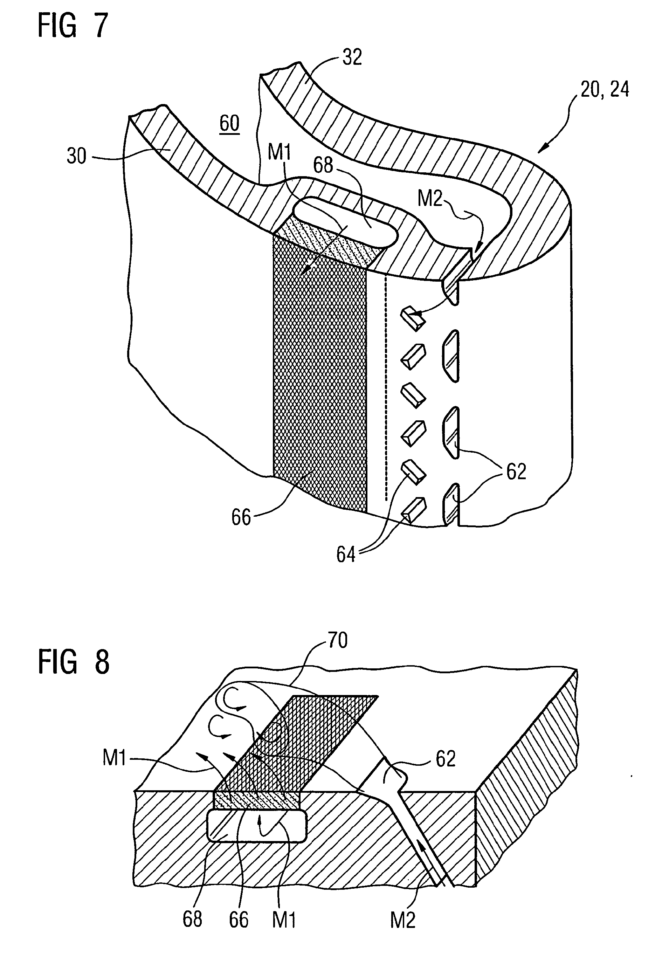

Eine weitere alternative Ausgestaltung der Erfindung ist in FIG 7 dargestellt, die eine geschnittene teilperspektivische Darstellung des Schaufelblattes 24 der in FIG 2 dargestellten Turbinenschaufel 20 ist. Das Schaufelblatt 24 ist im Inneren hohl ausgebildet mit einem Hohlraum 60, der geeignet ist, als zweites Medium M2 ein Kühlmittel zu führen, welches über lasergebohrte und anschließend durch Funkenerosion hergestellte, als "fan-shapes holes" bezeichnete Öffnungen 62 ausströmen kann und dabei einen auf der Oberfläche des Schaufelblattes 24 strömenden Kühlluftfilm erzeugt.

In Strömungsrichtung des entlang des Schaufelblattes 24 strömenden Gases 11 ist stromab der Filmkühlöffnungen 62 ein poröser Einsatz 66 vorgesehen, der einen in der Schaufelwand 30 liegenden Brennstoffkanal 68 begrenzt und durch den das dem Brennstoffkanal 68 zugeführte erste Medium M1 austreten kann. Das aus den Filmkühlöffnungen 62 austretende Kühlmittel strömt nierenwirbelartig über den porösen Einsatz 66 hinweg und vermischt sich währenddessen mit dem dort ausgeblasenen Brennstoff.

Außerdem können zwischen der Filmkühlöffnung 62 und dem porösen Einsatz 66 Verwirbelungselemente 64, beispielsweise Turbulatoren oder Pins, vorgesehen sein, die eine weitere Verwirbelung der aus den Filmkühlöffnung 62 ausgetretenen Kühlluft und somit einer verbesserte Durchmischung und eine weniger emissionsbehaftete Verbrennung herbeiführen sollen.

Durch die verwirbelte Strömung kann das in die Strömung eingebrachte erste Medium M1, vorzugsweise Brennstoff, besonders effizient untergemischt werden, da die in den Wirbeln enthaltene Energie zur Herstellung einer homogenen Vermischung genutzt wird. Durch die homogene Vermischung wird das Gas 11 gleichmäßig mit Brennstoff angereichert, welcher sich aufgrund der im Gas 11 auftretenden Temperaturen selbsttätig entzündet und aufgrund der sich dadurch einstellenden kurzen Ausbranddauer und Reaktionsstrecke zur emissionsarmen Nachheizung der Turbine 8 genutzt werden kann.

FIG 8 zeigt darüber hinaus im Detail eine divergierende Filmkühlöffnung 62 nach Art eines "fan-shaped holes" mit einem sich aufgrund der umlaufenden Kontur der Öffnung 62 sich einstellenden Nierenwirbel 70, in dem das aus dem porösen Einsatz 66 ausströmende Brenngas effizient untergemischt wird.

## Patentansprüche

1. Verfahren zum Zuführen eines ersten Mediums (M1) in ein einen Gasraum (18) einer Turbine (8) durchströmendes Gas (11),
**dadurch gekennzeichnet, dass**
das erste Medium (M1) an einer der Stellen dem Gas (11) zugeführt wird, an der ein Wirbel (33, 34) einer Strömung im Gasraum (18) auftritt und/oder an der der Wirbel (33, 34) entlang strömt.

2. Verfahren nach Anspruch 1,
bei dem als die Strömung die Gasströmung (11) selbst verwendet wird und das erste Medium (M1) in einen Hufeisenwirbel (33, 34) des Gases (11) eingeblasen wird.

3. Verfahren nach Anspruch 2,
bei dem der Hufeisenwirbel (33, 34) des Gases (11) von einem Schaufelblatt (24) der Turbine (8) oder von einem Verwirbelungselement (64) verursacht wird.

4. Verfahren nach Anspruch 1,
bei dem in eine aus einer Filmkühlöffnung (62) austretende Kühlströmung das erste Medium (M1) eingeblasen wird.

5. Verfahren nach einem der vorangehenden Ansprüche,
bei dem das erste Medium (M1) annähernd senkrecht zur Wirbelachse (51) eingeblasen wird.

6. Verfahren nach einem der vorangehenden Ansprüche,
bei dem zum Nachheizen des die Turbine (8) durchströmenden Gases (11) als erstes Medium (M1) ein Brennstoff oder ein Brennstoffgemisch dem Gas (11) untergemischt wird.

7. Turbinenschaufel (20),
insbesondere zum Durchführen des Verfahrens nach einem der Ansprüche 1 bis 6,
mit einer Plattform (22), an der ein sich quer dazu erstreckendes, von einem Gas (11) umströmbares Schaufelblatt (24) angeordnet ist und
in der mindestens eine Öffnung (31) zum Untermischen eines ersten Mediums (M1) in das Gas (11) vorgesehen ist,
**dadurch gekennzeichnet, dass**
die Öffnung (31) an einer Stelle in der Oberfläche des Schaufelblatts (24) oder in der Oberfläche der Plattform (22) vorgesehen ist, an der ein Strömungsmedium wirbelartig entlang strömt.

8. Turbinenschaufel (20) nach Anspruch 7,
bei der die Öffnung (31) in einem zwischen der Plattform (22) und dem Schaufelblatt (24) angeordneten Übergangsbereich vorgesehen ist.

9. Turbinenschaufel (20) nach Anspruch 7,
bei der die Öffnung (31) in der Plattform (22), stromab einer Hinterkante (28) des Schaufelblatts (24) oder seitlich davon angeordnet ist.

10. Turbinenschaufel (20) nach Anspruch 7,
bei der die Öffnung (31) in der Plattform (22) vor einer Vorderkante (26) des Schaufelblatts (24) angeordnet ist.

11. Turbinenschaufel (20) nach einem der Ansprüche 7 bis 10, bei der zur Erzeugung von Wirbeln (33, 34) an der Plattform (22) und/oder an dem Schaufelblatt (24) Mittel vorgesehen sind, aus denen das den Wirbeln (33, 34) zuführbare Medium (M1) ausströmbar ist.

12. Turbinenschaufel (20) nach einem der Ansprüche 7 bis 11, bei der stromauf der Öffnung (31) eine Filmkühlöffnung (62) vorgesehen ist.

13. Turbinenschaufel (20) nach Anspruch 12,
bei der zwischen der Öffnung (31) und der ihr stromauf zugeordneten Filmkühlöffnung (62) mindestens ein Verwirbelungselement (64) vorgesehen ist.

14. Gegossene Turbinenschaufel (20) nach einem der Ansprüche 7 bis 13.

15. Gasturbine (1) mit einer Turbinenschaufel (20) nach einem der Ansprüche 7 bis 14.
